# EUROPEAN PATENT APPLICATION

(11) **EP 4 654 114 A1**
(43) Date of publication of application: **26.11.2025**
(21) Application number: 25166506.3
(22) Date of filing: 27.03.2025
(51) Int. Cl.: G06Q 30/06, G06Q 20/20

(54) **INFORMATION PROCESSING SYSTEM, PROGRAM, AND MONITORING METHOD**

(30) Priority: 21.05.2024 JP 2024082448
(71) Applicant: Glory Ltd., Hyogo 670-8567 (JP)
(72) Inventor: MORIMOTO, Daisuke, Hyogo, 670-8567 (JP); FUKUDA, Koki, Hyogo, 670-8567 (JP)
(74) Representative: SSM Sandmair

(57) **Abstract**

An information processing system includes: illicit behavior detection circuitry configured to detect illicit behavior by a customer regarding purchase of items at a store; determination circuitry configured to determine whether the amount of illicit behavior by the customer detected by the illicit behavior detection circuitry satisfies a predetermined criterion; and first output circuitry configured to, in response to the determination circuitry determining that the amount of illicit behavior by the customer satisfies the criterion, output a first alert to an in-store terminal, the first alert indicating occurrence of the illicit behavior.

## Description

### BACKGROUND

### Technical Field

The present disclosure relates to an information processing system, a program, and a monitoring method.

### Related Art

JP2023-07363A discloses a fraud detection system that sends an alert to an employee terminal in response to detecting a fraud or an erroneous operation by a person. This fraud detection system evaluates a person's behavior in purchasing items based on the number of times the person staying in a store has picked up items sold in the store and the number of items the person has registered for purchase. The fraud detection system detects a fraud or an erroneous operation by the person based on the results of evaluation of the person's behavior in purchasing items.

If illicit behavior of a customer is detected in a store, actions are taken, such as contacting the police. However, since these actions are very time-consuming, stores have a need to be able to take action in light of factors such as the scale of damage caused by the illicit behavior and the degree of the maliciousness of the illicit behavior.

It is an object of the present disclosure to provide a system that can flexibly accommodate the need to be able to take action in light of factors such as the scale of damage caused by the illicit behavior and the degree of the maliciousness of the illicit behavior.

### SUMMARY

A first aspect of the present disclosure relates to an information processing system including: detection circuitry configured to detect illicit behavior by a customer regarding purchase of items at a store; determination circuitry configured to determine whether an amount of illicit behavior by the customer detected by the detection circuitry satisfies a predetermined criterion; and output circuitry configured to, in response to the determination circuitry determining that the amount of illicit behavior by the customer satisfies the criterion, output a first alert to an in-store terminal, the first alert indicating occurrence of the illicit behavior.

In some embodiments, the determination circuitry may be configured to: determine that the criterion is satisfied if a number of instances of illicit behavior by the customer has reached a predetermined count, the predetermined count being greater than one; and determine that the criterion is not satisfied if the number of instances has not reached the predetermined count.

In some embodiments, the determination circuitry may be configured to determine whether the amount of illicit behavior satisfies the criterion for the customer whose illicit behavior has been detected by the detection circuitry, the amount of illicit behavior including illicit behavior that the customer previously committed during checkout processes.

In some embodiments, the detecting circuitry may be configured to, in response to detecting illicit behavior by the customer, obtain information about a type of the illicit behavior, and the determination circuitry may be configured to determine whether the amount of illicit behavior by the customer satisfies the criterion for each type of illicit behavior.

In some embodiments, the determination circuitry may be configured to: determine that the criterion is satisfied if the illicit behavior by the customer detected by the detection circuitry is the second or subsequent instance of illicit behavior by the customer; and if the illicit behavior by the customer detected by the detection circuitry is of a predetermined type, determine that the criterion is satisfied even if the illicit behavior is not the second or subsequent instance of illicit behavior by the customer.

In some embodiments, the information processing system may further include: second detection circuitry configured to detect a customer entering the store; and second output circuitry configured to, in response to the second detection circuitry detecting a customer with a history of illicit behavior of a predetermined type, output a second alert to the in-store terminal at a time when the customer is detected, the second alert indicating the detection of the customer with the history.

In some embodiments, the information processing system may further include a memory configured to store count information for each customer and for each type of illicit behavior, the count information being information about a number of instances of illicit behavior by each customer, and the determination circuitry may be configured to determine whether the amount of illicit behavior by the customer detected by the detection circuitry satisfies the criterion for each type of illicit behavior, based on the count information.

In some embodiments, the information processing system may further include a memory configured to store count information for each customer, the count information being information about a number of instances of illicit behavior by each customer, the determination circuitry may be configured to determine whether the amount of illicit behavior by the customer detected by the detection circuitry satisfies the criterion, based on the count information, and the memory may be configured to, in response to behavior of the customer at the store satisfying a predetermined condition, initialize the count information relating to the customer.

In some embodiments, the output circuitry may be configured to output the first alert to a customer terminal used by the customer, in addition to the in-store terminal.

In some embodiments, the output circuitry may be configured to output, in addition to the first alert, information representing a degree of maliciousness of the illicit behavior by the customer to the in-store terminal.

A second aspect of the present disclosure relates to a program for causing a computer to implement functions of: detecting illicit behavior by a customer regarding purchase of items at a store; determining whether an amount of illicit behavior by the customer detected satisfies a predetermined criterion; and in response to the amount of illicit behavior satisfying the criterion, outputting a first alert to an in-store terminal, the first alert indicating occurrence of the illicit behavior.

A third aspect of the present disclosure relates to a monitoring method in a monitoring system, the method including: detecting illicit behavior by a customer regarding purchase of items at a store; determining whether an amount of illicit behavior by the customer detected satisfies a predetermined criterion; and in response to the amount of illicit behavior satisfying the criterion, outputting a first alert to an in-store terminal, the first alert indicating occurrence of the illicit behavior.

Embodiments of the present disclosure provide a system that can flexibly accommodate the need to be able to take action in light of factors such as the scale of damage caused by illicit behavior and the degree of the maliciousness of illicit behavior.

### BRIEF DESCRIPTION OF THE DRAWINGS

An exemplary embodiment of the present disclosure will be described in detail with reference to the following figures, wherein:
FIG. 1 illustrates an example configuration of a store in which a monitoring system according to an exemplary embodiment is used;
FIG. 2 illustrates an example overall configuration of the monitoring system according to the exemplary embodiment;
FIG. 3 illustrates an example schematic configuration of a checkout device according to the exemplary embodiment;
FIG. 4 is a block diagram illustrating an example functional configuration of the checkout device according to the exemplary embodiment;
FIG. 5 illustrates an example schematic configuration of a management device;
FIG. 6 illustrates an example relationship between whether first output circuitry outputs a first alert and the type and amount of illicit behavior detected by illicit behavior detection circuitry;
FIG. 7 is a flowchart illustrating an example monitoring process by control circuitry.

### DETAILED DESCRIPTION

An exemplary embodiment of the present disclosure is detailed below with reference to the appended drawings.

### First Embodiment

### (Overall configuration of a monitoring system 1)

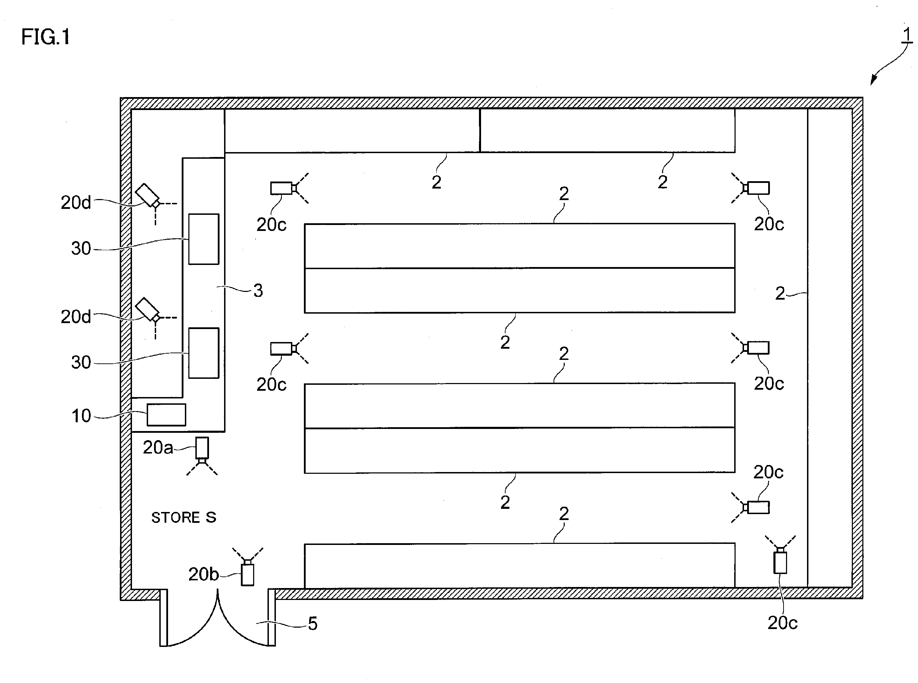

FIG. 1 illustrates an example configuration of a store S in which a monitoring system 1 according to the present embodiment is used.

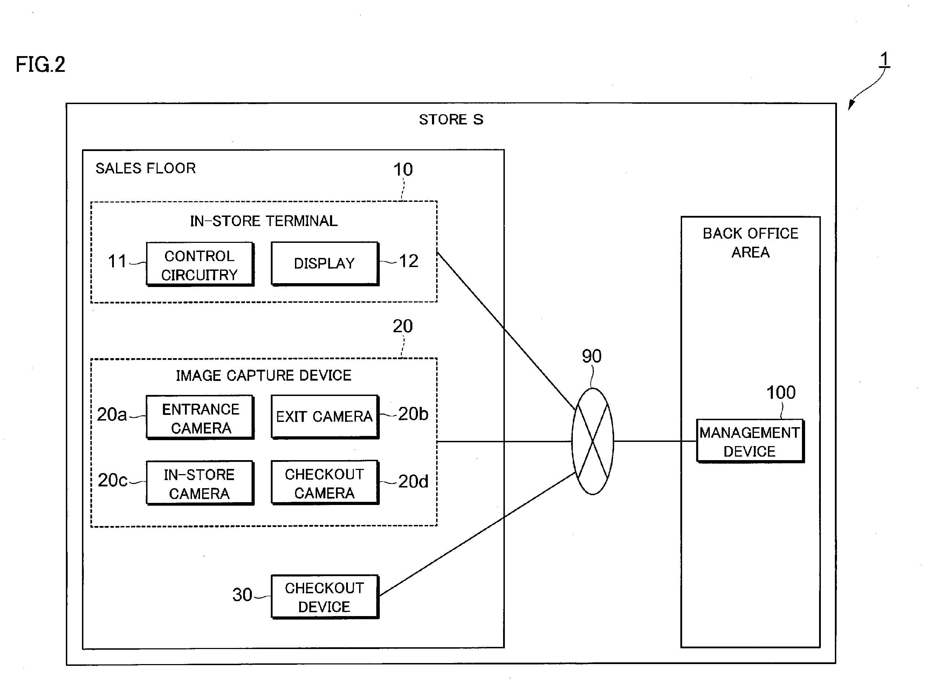

FIG. 2 illustrates an example overall configuration of the monitoring system 1 according to the present embodiment.

The monitoring system 1, which is an example of the information processing system, is used for monitoring behavior of customers in a store and outputting an alert in response to a customer committing illicit behavior.

The store S in which the monitoring system 1 is used may be, for example but is not limited to, a convenience store, a supermarket, or a drug store. Typically, the store S has a sales floor where items are displayed and customers do some shopping, and a back office area that is used by staff working in the store S or other relevant persons. In FIG. 1, only the sales floor of the store S is shown. In the present embodiment, the sales floor of the store S may be simply referred to as the store S.

In the store S, multiple display shelves 2 are located. Each of the display shelves 2 displays items. In addition, at least one checkout device 30 is located in the store S. In this example, multiple checkout devices 30 are located in the store S.

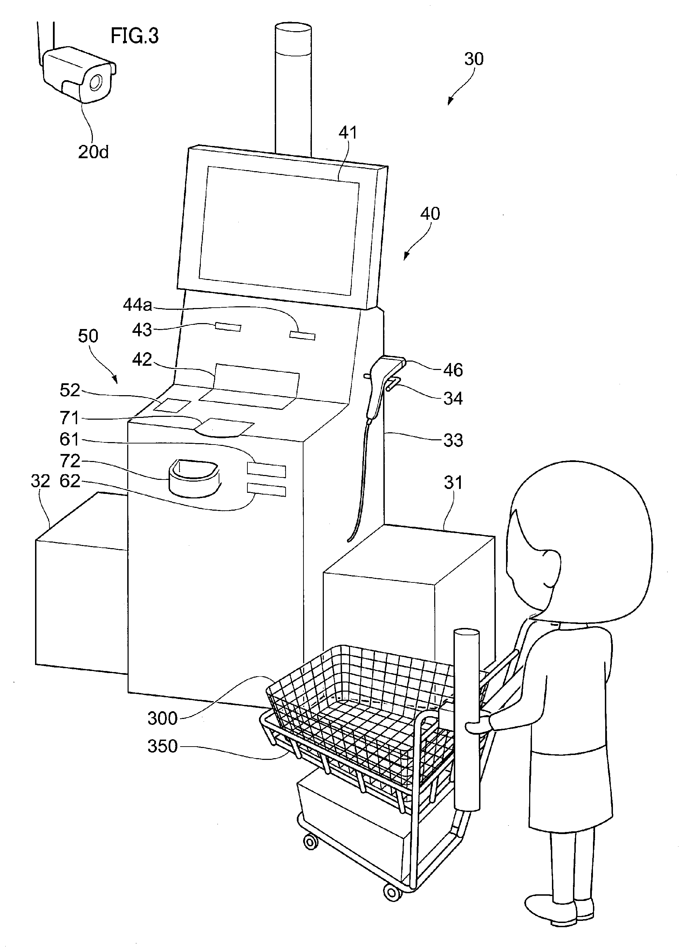

A customer who has entered the store S through a doorway 5 chooses and puts items displayed on the display shelves 2 into a shopping basket 300 (see FIG. 3 below) as he/she walks through paths between the display shelves 2. Thereafter, the customer uses any of the checkout devices 30 provided in a checkout area 3 to check out the items in the shopping basket 300.

The monitoring system 1 includes an in-store terminal 10, image capture devices 20, the checkout devices 30, and a management device 100. The in-store terminal 10, the image capture devices 20, the checkout devices 30, and the management device 100 are connected via a network 90.

The network 90 may be any communication network used for data communication between the devices and may be e.g., a local area network (LAN). The communication lines used for data communication may be either or both wired and wireless. Examples of wireless LANs include WiFi^{®} and Bluetooth^{®}.

In the present embodiment, the monitoring system 1 or the management device 100 is an example of the information processing system.

### (In-store terminal 10)

The in-store terminal 10 is a device used by a person who monitors customers in the store S for any illicit behavior. The in-store terminal 10 is a device to display a first alert output from the management device 100, the first alert indicating that a customer has committed illicit behavior regarding purchase of items in the store S. Hereinafter, illicit behavior of a customer regarding purchase of items in the store S may be simply referred to as illicit behavior. The illicit behavior is described in detail in subsequent paragraphs.

Examples of the person who uses the in-store terminal 10 include staff working in the store S, such as employees and store managers, and security guards to guard against illicit behavior in the store S. Hereinafter, a user of the in-store terminal 10 may be referred to as a clerk.

The in-store terminal 10 includes control circuitry 11 including a central processing unit (CPU), a read only memory (ROM), and a random access memory (RAM). The ROM stores a control program to be executed by the CPU. The CPU reads the control program stored in the ROM and executes the control program using the RAM as a work area. Each element of the in-store terminal 10 is controlled by the CPU executing the control program.

The in-store terminal 10 includes a display 12 for displaying various information to clerks. For example, the display 12 may be a liquid crystal display or an organic electro luminescence (EL) display.

The in-store terminal 10 may be, for example, a computer operated by a clerk in the store S. The in-store terminal 10 may be a laptop PC, tablet PC, tablet terminal, portable information terminal (PDA), or multifunctional cell phone (so-called "smart phone").

In this example, the in-store terminal 10 is located on the sales floor of the store S. The in-store terminal 10 may be located in the back office of the store S. In cases where the in-store terminal 10 is a portable device such as portable information terminal and multifunctional cell phone, the clerk may carry the in-store terminal 10.

### (Image capture device 20)

The image capture device 20 captures customers who have entered the store S and obtains captured images. Images captured by the image capture device 20 may be moving images or may be still images captured at predetermined time intervals. The image capture device 20 outputs the captured images to the management device 100.

The image capture device 20 may be, for example, a compact camera such as a CCD camera.

**In** the present embodiment, multiple image capture devices 20 are located in the store S. To further illustrate, the image capture devices 20 include an entrance camera 20a capturing customers entering the store S through the doorway 5. The image capture devices 20 also include an exit camera 20b capturing customers leaving the store S through the doorway 5. The image capture devices 20 also include in-store cameras 20c capturing customers moving around the store S to choose items displayed on the display shelves 2. The image capture devices 20 also include checkout cameras 20d capturing customers near the respective checkout devices 30. In this example, multiple in-store cameras 20c are located to leave no blind spots in the store S to ensure that customers in the store S are always captured. In this example, multiple checkout cameras 20d are located corresponding to the respective checkout devices 30. The checkout cameras 20d may capture customers waiting in line around the respective checkout devices 30, as well as customers checking out on the respective checkout devices 30.

Note that, in FIG. 2, only one of the multiple in-store cameras 20c and only one of the checkout cameras 20d are shown.

### (Checkout device 30)

The checkout device 30 is a self-checkout machine operated by customers themselves. To further illustrate, customers use the checkout device 30 to register items and pay the purchase amount for the registered items. In the description of the present embodiment, processes at the checkout device 30, including registering items and paying the purchase amount, may be collectively referred to as an item checkout process. The checkout device 30 is an example of the checkout terminal for the item checkout process. In this example, multiple checkout devices 30 are located in the store S.

Note that, in FIG. 2, only one of the multiple checkout devices 30 is shown.

FIG. 3 illustrates an example schematic configuration of the checkout device 30 according to the present embodiment.

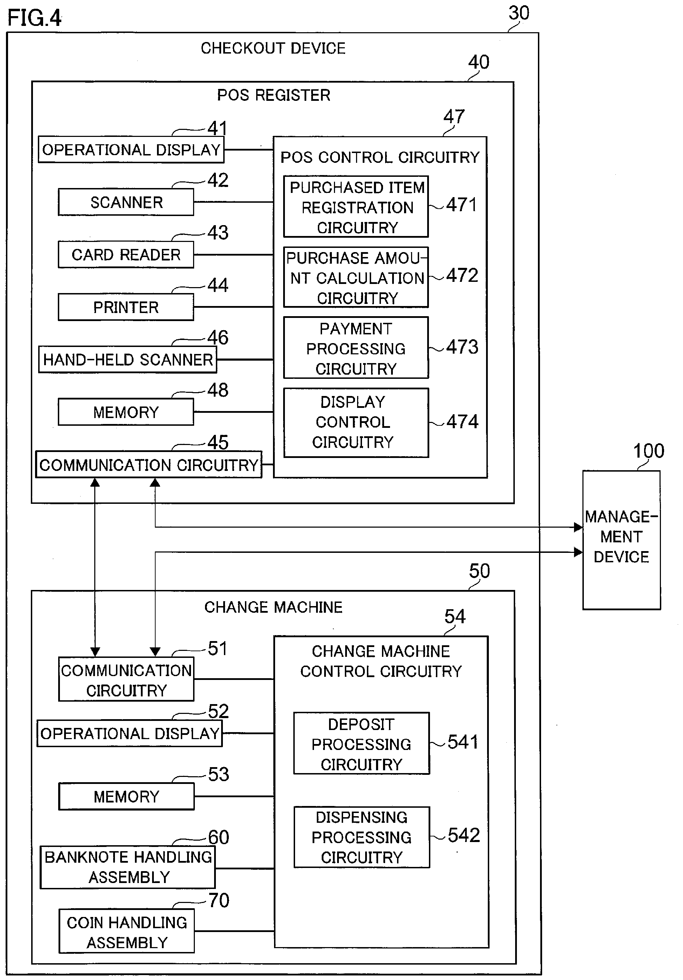

FIG. 4 is a block diagram illustrating an example functional configuration of the checkout device 30 according to the present embodiment.

The checkout device 30 includes a POS register 40 for registering items and a change machine 50 for depositing and dispensing money. The checkout device 30 includes an unregistered item table 31 for placing unregistered items, and a registered item table 32 for placing registered items. The POS register 40 and the change machine 50 are detailed below.

### (POS register 40)

The POS register 40 includes an operational display 41, a scanner 42, a card reader 43, a printer 44, communication circuitry 45, and a hand-held scanner 46.

The operational display 41 may be a liquid crystal touch panel display, for example.

The scanner 42 obtains information about items, such as their names and prices, by optically reading a bar code image attached to each item.

The card reader 43 reads information from credit cards, debit cards, prepaid cards, etc.

The printer 44 ejects, from a receipt ejector 44a, a receipt on which transaction details are printed, including the names and prices of the registered items, the amount of money deposited, the amount of change, and the date and time.

The communication circuitry 45 is a communication interface that communicates with the change machine 50 and the management device 100.

The hand-held scanner 46 is located on an upper portion of a device enclosure 33 of the checkout device 30. The upper portion of the device enclosure 33 includes a holder 34 for holding the hand-held scanner 46 with the distal end of the hand-held scanner 46 hooked to it. The hand-held scanner 46 is held and operated by a customer to obtain information about items, such as their name and prices, by optically reading a bar code image attached to each item.

The scanner 42 and hand-held scanner 46 may read any information for identifying items and may, for example, read information other than barcodes. The scanner 42 and hand-held scanner 46 may read other information than information for identifying items. For example, the scanner 42 and hand-held scanner 46 may obtain information about a customer who is a member of the store S, by reading a bar code image attached to a membership card of the store S or the like.

The POS register 40 also includes POS control circuitry 47 to control the entire POS register 40. The POS control circuitry 47 includes a CPU, a ROM, and a RAM.

The POS register 40 also includes a memory 48 to store various programs, such as an operating system (OS) and applications, input data for various programs, output data from various programs, etc. For example, the memory 48 may be a storage device such as a hard disk drive (HDD) or a semiconductor memory.

The POS control circuitry 47 includes purchased item registration circuitry 471, purchase amount calculation circuitry 472, payment processing circuitry 473, and display control circuitry 474.

In response to the scanner 42 or hand-held scanner 46 obtaining information about items, such as their names and prices, by reading a bar code attached to each item, the purchased item registration circuitry 471 registers the items using the obtained information.

Also, the purchased item registration circuitry 471 transmits information about the registered items to the management device 100. The information about the registered items include, for example, the names, quantities, etc. of the registered items.

The purchase amount calculation circuitry 472 calculates the purchase amount by summing the prices of all items registered by the purchased item registration circuitry 471.

The payment processing circuitry 473 completes the transaction by settling the purchase amount calculated by the purchase amount calculation circuitry 472 and issues a receipt. In other words, the payment processing circuitry 473 causes the printer 44 to eject, from the receipt ejector 44a, a receipt on which the transaction details are printed. The transaction details include, for example, the names and prices of the registered items, the amount of money deposited, the amount of change, and the date and time. The purchase amount may be paid by a payment card such as a credit card or by cash. If cash payment is selected, the payment processing circuitry 473 transmits the purchase amount to the change machine 50 and completes the payment process upon receiving a checkout completion notification from the change machine 50.

If the purchase amount is not paid by a customer, the payment processing circuitry 473 outputs to the management device 100 an incomplete payment notification indicating that the payment has not been completed. To further illustrate, if the purchase amount is not paid by the customer for a certain period of time after the purchase amount is calculated by the purchase amount calculation circuitry 472, the payment processing circuitry 473 outputs an incomplete payment notification to the management device 100.

If the purchase amount is paid by a credit card, the payment processing circuitry 473 outputs information obtained by reading the credit card with the card reader 43 to the management device 100. The information obtained by reading the credit card may include, for example, information that can identify the customer who uses the credit card, such as the number and name on the credit card.

The display control circuitry 474 causes the operational display 41 to present information for prompting the customer to register items to be purchased. For example, the display control circuitry 474 causes the operational display 41 to display text information "Please scan the bar code of each item".

The display control circuitry 474 also causes the operational display 41 to display a list of the items registered by the purchased item registration circuitry 471. The display control circuitry 474 also causes the operational display 41 to display the purchase amount calculated by the purchase amount calculation circuitry 472.

In addition, if cash payment is selected, the display control circuitry 474 causes the operational display 41 to display the amount of money deposited, the amount of change, etc.

### (Change machine 50)

The change machine 50 includes communication circuitry 51, an operational display 52, and a memory 53, as shown in FIG. 4. The communication circuitry 51 is a communication interface that communicates with the POS register 40 and the management device 100. The operational display 52 may be a liquid crystal touch panel display or the like. For example, the memory 53 may be a storage device such as an HDD or a semiconductor memory.

The change machine 50 also includes change machine control circuitry 54 to control the entire change machine 50. The change machine control circuitry 54 includes a CPU, a ROM, and a RAM. The change machine 50 also includes a banknote handling assembly 60 and a coin handling assembly 70. The change machine 50 also includes a banknote inlet 61 (see FIG. 3) for depositing banknotes and a banknote outlet 62 (see FIG. 3) for dispensing banknotes. The change machine 50 also includes a coin inlet 71 (see FIG. 3) for depositing coins and a coin outlet 72 (see FIG. 3) for dispensing coins.

The change machine control circuitry 54 includes deposit processing circuitry 541 to process money deposit and dispensing processing circuitry 542 to process dispensing of money.

In response to receiving information indicating the purchase amount from the POS register 40, the deposit processing circuitry 541 permits deposit of money into the banknote handling assembly 60 and/or the coin handling assembly 70. The deposit processing circuitry 541 then obtains the number of banknotes/coins deposited from the banknote handling assembly 60 and/or the coin handling assembly 70 for each denomination and calculates the total amount of money deposited. If the total amount of money deposited exceeds the purchase amount, the deposit processing circuitry 541 calculates the difference between the total amount of money deposited and the purchase amount as change. Thereafter, the deposit processing circuitry 541 commands the dispensing processing circuitry 542 to dispense the calculated change. On the other hand, if the total amount of money deposited matches the purchase amount or if the dispensing processing circuitry 542 has successfully completed dispensing the change, the deposit processing circuitry 541 transmits a checkout completion notification to the POS register 40.

In response to receiving the command from the deposit processing circuitry 541 to dispense the change, the dispensing processing circuitry 542 determines the denomination and number of banknotes/coins to be dispensed according to the amount of change. The dispensing processing circuitry 542 then performs a dispensing process by issuing the dispense command to the banknote handling assembly 60 and/or the coin handling assembly 70. Upon the change being successfully dispensed, the dispensing processing circuitry 542 notifies the deposit processing circuitry 541 of the completion of the dispensing process.

To register the items to be purchased put in the shopping basket 300, the customer places the shopping basket 300 containing the items on the unregistered item table 31. The customer then repeats the following actions: remove each one of the items from the shopping basket 300, hold the barcode attached thereto over the scanner 42 for registration, and transfer the item onto the registered item table 32.

If any items are placed on the lower tier of a cart 350 carrying the shopping basket 300, the customer uses the hand-held scanner 46 to read the bar code attached to each one of these items and register them.

Once every item has been registered, the customer pays the purchase amount and completes the item checkout process, based on the purchase amount displayed on the operational display 41.

Typically, the customer who has completed the item checkout process leaves the store S through the doorway 5 with the purchased items in his/her possession or placed on the cart 350.

### (Management device 100)

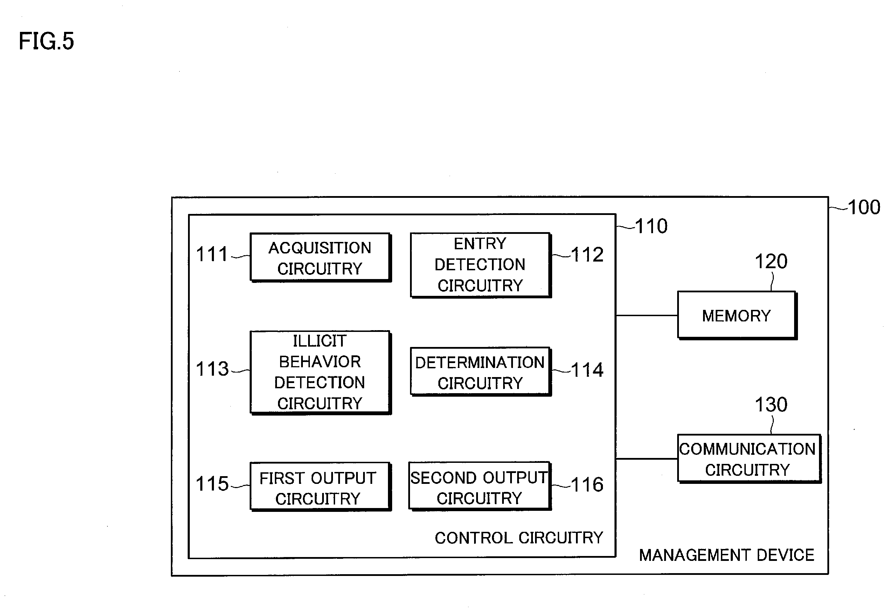

FIG. 5 illustrates an example schematic configuration of a management device 100.

The management device 100 includes control circuitry 110 to control the entire management device 100. The control circuitry 110 includes a CPU, a ROM, and a RAM.

The management device 100 also includes a memory 120 to store various programs, such as an OS and applications, input data for various programs, output data from various programs, etc. For example, the memory 120 may be a storage device such as an HDD or a semiconductor memory.

The management device 100 also includes communication circuitry 130 communicating with other devices constituting the monitoring system 1 such as the in-store terminal 10, the image capture devices 20, and the checkout devices 30. For example, the communication circuitry 130 may be a communication interface.

For example, the management device 100 may be a computer that functions to exchange information with other devices constituting the monitoring system 1. Similarly to the in-store terminal 10, the management device 100 may be a laptop PC, desktop PC, tablet PC, tablet terminal, portable information terminal, or multifunctional cell phone.

In this example, the management device 100 is installed in the back office of the store S. In addition to the back office of the store S, the management device 100 may also be installed in e.g., a head office managing multiple stores including the store S.

The management device 100 detects illicit behavior of a customer regarding the purchase of items in the store S. If the amount of illicit behavior of the customer detected meets a predetermined criterion, the management device 100 outputs to the in-store terminal 10 a first alert indicating that the illicit behavior has been committed.

Here, the illicit behavior committed by customers regarding the purchase of items in the store S is classified into multiple types. First of all, the illicit behavior detected by the management device 100 is described. Note that the illicit behavior mentioned below is merely an example, and the management device 100 may detect other types of customer behavior in the store S than those mentioned below as the illicit behavior.

Illicit behavior is classified into the following two types: illicit behavior that is committed mainly on the sales floor of the store S; and illicit behavior that is committed mainly near any checkout device 30 in the store S.

Examples of the illicit behavior that is committed on the sales floor of the store S include shoplifting and shoplifting with the whole basket.

Shoplifting refers to the act of stealing items displayed on the sales floor by putting them in a customer's pocket, shopping bag, or the like.

Shoplifting with the whole basket refers to the act of leaving the store S without going through the checkout process at any checkout device 30 after putting items displayed on the sales floor into the shopping basket 300.

Examples of the illicit behavior that is committed near any checkout device 30 in the store S include scan skipping, leaving items under the cart, leaving the store without paying, taking away unpaid items, barcode spoofing, and illicit operation of the checkout device 30.

Scan skipping refers to the act of transferring one or more items in the shopping basket 300 to the registered item table 32 without them registered and going through the checkout process, when registering items in the shopping basket 300 using the checkout device 30. For example, a customer may commit scan skipping by holding the items over the scanner 42 while hiding the barcode attached thereto or by holding the side of the items that does not have a barcode over the scanner 42. In another example, a customer may commit scan skipping by transferring multiple identical items to the registered item table 32 despite the fact that the customer has held only one item over the scanner 42.

Leaving the items under the cart refers to the act of going through the checkout process without registering items placed on the lower tier of the cart 350, which carries the shopping basket 300, with the checkout device 30.

Leaving the store without paying refers to the act of leaving the store S without paying the purchase amount after registering the items with the checkout device 30.

Taking away unpaid items refers to the act of taking away unpaid items along with items for which payment has been made at the checkout device 30. For example, a customer may take away unpaid items by placing the shopping bag or the like containing unpaid items on the registered item table 32 and then registering the remaining items with the checkout device 30 and putting them into the shopping bag.

Barcode spoofing refers to the act of registering an item with the checkout device 30 by scanning a different barcode from the one actually attached to that item. For example, a customer may commit barcode spoofing by scanning a barcode of another product that is cheaper than the item of interest. In another example, when purchasing a set product combining multiple items, a customer may commit barcode spoofing by scanning a barcode attached to a single item rather than the one attached to the set product.

Illicit operation of the checkout device 30 refers to the act of registering items cheaper than those that should be registered or registering items in smaller quantities than they should be when operating the operational display 41 to register items without barcodes etc.

In the store S, a customer may maliciously commit illicit behavior or may mistakenly commit illicit behavior without malicious intent. In the present embodiment, the management device 100 detects any illicit behavior of a customer in the store S, regardless of whether the customer has malicious intent or not.

The illicit behavior mentioned above includes the following two types: illicit behavior that is likely to be committed by customers with malicious intent; and illicit behavior that is likely to be committed by customers by mistake, without malicious intent. In other words, the illicit behavior mentioned above has a different likelihood of being committed by customers with malicious intent, depending on the type. In the description of the present embodiment, illicit behavior that is likely to be committed by customers with malicious intent may be referred to as illicit behavior with a high degree of maliciousness. Illicit behavior that is less likely to be committed by customers with malicious intent, i.e., illicit behavior that is likely to be committed by customers by mistake, may be referred to as illicit behavior with a low degree of maliciousness.

For example, among the types of illicit behavior mentioned above, shoplifting, shoplifting with the whole basket, leaving the store without paying, barcode spoofing, and taking away unpaid items fall under the category of illicit behavior with a high degree of maliciousness. Among the types of illicit behavior mentioned above, scan skipping, leaving the items under the cart, and illicit operation of the checkout device 30 fall under the category of illicit behavior with a low degree of maliciousness. Note that this classification of illicit behavior by the degree of maliciousness is merely exemplary and not limiting. Multiple types of illicit behavior may be classified into three or more categories, depending on the degree of maliciousness.

### (Memory 120)

The memory 120 stores a history of illicit behavior of each customer using the store S. To further illustrate, the memory 120 stores identification information used for identifying each customer who has committed illicit behavior in the store S in the past, and the history of illicit behavior of each customer stored in association with the identification information.

**In** the description of the present embodiment, the identification information used for identifying each customer who has committed illicit behavior in the store S in the past may be referred to as customer identification information.

An example of the customer identification information is an image of a customer captured by the image capture device 20 when the customer has committed illicit behavior in the store S in the past, more specifically, a customer's face image cropped from images captured by the image capture device 20.

Another example of the customer identification information is information obtained by reading a customer's credit card at the checkout device 30 when the customer has committed illicit behavior in the store S in the past. As described above, examples of the information obtained by reading a credit card include information that can identify the customer who uses the credit card, such as the number and name on the credit card.

The customer identification information may also include identification numbers, IDs, or other information assigned to each customer who has a history of illicit behavior.

A customer's history of illicit behavior is information indicating that the customer has committed illicit behavior in the store S in the past. **In** the present embodiment, the memory 120 stores information indicating the amount of illicit behavior committed by a customer in the store S in the past, as a history of the customer's illicit behavior. **In** the present embodiment, the term "past" refers to the period prior to the detection of the customer's entry to the store S by entry detection circuitry 112 (described below) of control circuitry 110.

The memory 120 updates the history of the customer's illicit behavior in the store S each time any illicit behavior of the customer is detected in the store S by illicit behavior detection circuitry 113 (described below) of the control circuitry 110.

In one example, the amount of illicit behavior may be the number of instances in which a customer has committed illicit behavior in the store S in the past.

For example, the management device 100 counts the number of instances in which a customer has committed illicit behavior in the store S in the past and stores it in the memory 120. The management device 100 may count the number of instances of illicit behavior collectively regardless of the type of illicit behavior, or may count the number of instances of illicit behavior individually by type.

In another example, the amount of illicit behavior may be the frequency with which a customer has committed illicit behavior in the store S in the past. Hereinafter, the frequency with which a customer has committed illicit behavior in the store S in the past may be referred to as the frequency of illicit behavior.

The management device 100 calculates the frequency of illicit behavior based on information such as the time intervals at which the customer has committed illicit behavior and the number of instances in which the customer has committed illicit behavior during a predetermined period of time, and stores the frequency of illicit behavior in the memory 120. The management device 100 may calculate the frequency of illicit behavior collectively regardless of the type of illicit behavior, or may calculate the frequency of illicit behavior individually by type.

In still another example, the amount of illicit behavior may be measured by points that are converted from the number of instances in which a customer has committed illicit behavior, by taking into account factors such as the maliciousness of the illicit behavior.

As described above, the degree of maliciousness of illicit behavior varies depending on its type. The management device 100 adds points for a customer each time the customer commits illicit behavior, where the points to be added vary depending on the degree of maliciousness of the illicit behavior. The management device 100 stores the added points in the memory 120. For example, the management device 100 adds larger points for illicit behavior with a high degree of maliciousness, and smaller points for illicit behavior with a low degree of maliciousness.

Note that the history of illicit behavior stored in the memory 120 is not limited to the number of instances, frequency, and points mentioned above and may be any other information that can be used to evaluate the amount of illicit behavior by a customer.

In cases where the memory 120 stores the number of instances of illicit behavior by a customer or the points converted from this number of instances as the amount of illicit behavior, the number of instances or the points may be initialized once the customer's behavior in the store S has satisfied a predetermined condition. The number of instances of illicit behavior by a customer or the points converted from this number of instances stored in the memory 120 as the amount of illicit behavior is an example of the count information.

For example, if a customer has not committed in any illicit behavior for a predetermined period of time after his/her last engagement in illicit behavior in the store S, the memory 120 may initialize the count information based on determining that the predetermined condition has been satisfied.

For example, the initialization may include deleting the history of the illicit behavior stored in the memory 120 or decrementing the number of instances of illicit behavior by the relevant customer or the corresponding points stored in the memory 120 to zero.

### (Control circuitry 110)

The control circuitry 110 includes acquisition circuitry 111 configured to obtain images captured by the image capture devices 20 and various information output from the checkout devices 30. The control circuitry 110 also includes entry detection circuitry 112 configured to detect a customer's entry to the store S. The control circuitry 110 also includes illicit behavior detection circuitry 113 configured to detect illicit behavior by a customer in the store S. The control circuitry 110 also includes determination circuitry 114 configured to, in response to the illicit behavior detection circuitry 113 detecting the illicit behavior, whether the amount of illicit behavior by the customer satisfies a predetermined criterion. The control circuitry 110 also includes first output circuitry 115 configured to, in response to the determination circuitry 114 determining that the amount of illicit behavior by the customer satisfies the criterion, output a first alert to the in-store terminal 10 indicating the occurrence of the illicit behavior. The control circuitry 110 also includes second output circuitry 116 configured to, in response to the entry detection circuitry 112 detecting the entry to the store S of a customer with a history of illicit behavior, output a second alert to the in-store terminal 10 indicating the customer's entry to the store S.

The acquisition circuitry 111 obtains images captured by the image capture devices 20, i.e., the entrance camera 20a, the exit camera 20b, the in-store cameras 20c, and the checkout cameras 20d.

The acquisition circuitry 111 also obtains information output from the POS control circuitry 47 in the POS register 40 of each checkout device 30. Specifically, the acquisition circuitry 111 obtains information about registered items output from the purchased item registration circuitry 471 of the POS control circuitry 47. The acquisition circuitry 111 also obtains incomplete payment notifications output from the payment processing circuitry 473 of the POS control circuitry 47. The acquisition circuitry 111 also obtains information, output from the payment processing circuitry 473 of each checkout device 30, that has been obtained by reading a credit card and can identify the customer who uses the credit card.

The entry detection circuitry 112 detects a customer's entry to the store S based on the captured images, information, etc. obtained by the acquisition circuitry 111. In the description of the present embodiment, a customer's entry to the store S may be referred to simply as a customer's entry. The entry detection circuitry 112 is an example of the second detection circuitry configured to detect a customer entering a store S.

The entry detection circuitry 112 can detect a customer's entry near the checkout devices 30 installed in the store S.

To further illustrate, the entry detection circuitry 112 can detect a customer's entry based on images captured by the checkout cameras 20d, which capture images of customers near the respective checkout devices 30. Specifically, the entry detection circuitry 112 can determine that a customer has entered the store S if the images captured by the checkout cameras 20d include images of the customer.

In addition, the entry detection circuitry 112 can detect a customer's entry based on information output from each checkout device 30 in conjunction with the operation of that checkout device 30 by the customer. Specifically, the entry detection circuitry 112 can determine that a customer has entered the store S if the acquisition circuitry 111 obtains information output from the checkout device 30 that has been obtained by reading a credit card and can identify the customer.

In addition, the entry detection circuitry 112 can detect a customer's entry near the doorway 5 of the store S. To further illustrate, the entry detection circuitry 112 can detect a customer's entry based on images captured by the entrance camera 20a, which capture images of customers entering the store S through the doorway 5.

Upon detecting a customer's entry, the entry detection circuitry 112 determines whether the customer detected entering the store has a history of illicit behavior. To further illustrate, the entry detection circuitry 112 determines whether the customer detected entering the store is a customer with a history of illicit behavior, based on the captured images and information obtained by the acquisition circuitry 111 and used for detection of the customer's entry as well as the customer identification information stored in the memory 120.

Upon determining that the customer detected entering the store is a customer with a history of illicit behavior, the entry detection circuitry 112 outputs the determination result to the second output circuitry 116. In other words, the entry detection circuitry 112 outputs information to the second output circuitry 116 indicating that the entry of a customer with a history of illicit behavior has been detected.

For example, the entry detection circuitry 112 compares the customer's face image cropped from the images captured by the image capture devices 20 and obtained by the acquisition circuitry 111 with a customer's face image stored in the memory 120, which is an example of the customer identification information.

Alternatively, the entry detection circuitry 112 compares the information, obtained by the acquisition circuitry 111, that can identify the customer using the credit card with information previously obtained by reading a credit card at the checkout device 30 when any customer committed illicit behavior in the store S in the past. The information previously obtained by reading a credit card at the checkout device 30 when any customer committed illicit behavior in the store S in the past is an example of the customer identification information stored in the memory 120.

Based on the comparison result, the entry detection circuitry 112 determines whether the customer detected entering the store S is a customer with a history of illicit behavior. For example, if the captured images or information obtained by the acquisition circuitry 111 match the customer identification information stored in the memory 120, the entry detection circuitry 112 determines that the customer detected entering the store S is a customer with a history of illicit behavior.

The entry detection circuitry 112 may determine that the customer detected entering the store S is a customer with a history of illicit behavior only if he/she has a history of illicit behavior of a predetermined type among multiple types of illicit behavior. For example, the entry detection circuitry 112 may determine that the customer detected entering the store S is a customer with a history of illicit behavior only if he/she has a history of illicit behavior with a high degree of maliciousness among multiple types of illicit behavior. In other words, the entry detection circuitry 112 may determine that the customer detected entering the store S is a customer without a history of illicit behavior if he/she has only a history of illicit behavior with a low degree of maliciousness among multiple types of illicit behavior.

The illicit behavior detection circuitry 113 detects a customer's illicit behavior in the store S based on the captured images and information obtained by the acquisition circuitry 111. The illicit behavior detection circuitry 113 is an example of the detection circuitry.

The illicit behavior detection circuitry 113 detects a customer's illicit behavior by, for example, analyzing images captured by the image capture devices 20. In another example, the illicit behavior detection circuitry 113 detects a customer's illicit behavior by comparing the results of analysis of images captured by the image capture devices 20 with information about items registered by each checkout device 30, which is output from the POS control circuitry 47.

The illicit behavior detection circuitry 113 can detect shoplifting and shoplifting with the whole basket, which are illicit behavior, by analyzing images captured by the exit camera 20b and the in-store cameras 20c, for example.

The illicit behavior detection circuitry 113 can also detect scan skipping, leaving items under the cart, and taking away unpaid items, which are illicit behavior, by analyzing images captured by the checkout cameras 20d, for example.

The illicit behavior detection circuitry 113 can also detect leaving the store without paying based on an incomplete payment notification output from the POS control circuitry 47, for example.

The illicit behavior detection circuitry 113 also checks for inconsistencies between the results of analysis of images captured by the checkout cameras 20d and the information about registered items output from the POS control circuitry 47, for example. This allows the illicit behavior detection circuitry 113 to detect barcode spoofing and illicit operation of any checkout device 30, which are illicit behavior.

The above methods used by the illicit behavior detection circuitry 113 for detecting various types of illicit behavior are merely exemplary and not limiting.

In response to the illicit behavior detection circuitry 113 detecting a customer's illicit behavior, the determination circuitry 114 determines whether the amount of illicit behavior by the customer satisfies the predetermined criterion, based on the history of the customer's illicit behavior stored in the memory 120. The amount of illicit behavior is a value that represents how many times the customer has committed illicit behavior during a predetermined period of time prior to the above detection of the illicit behavior by the illicit behavior detection circuitry 113.

The determination circuitry 114 determines that the amount of illicit behavior by the customer satisfies the criterion if the amount of illicit behavior is greater than or equal to a predetermined value. The determination circuitry 114 determines that the amount of illicit behavior by the customer does not satisfy the criterion if the amount of illicit behavior is less than the predetermined value. In the description of the present embodiment, the predetermined criterion about the amount of illicit behavior may be simply referred to as the criterion.

Thus, the determination circuitry 114 outputs the determination result to the first output circuitry 115.

First, we illustrate a case where the determination circuitry 114 makes a determination based on the number of instances of illicit behavior by a customer that is counted collectively regardless of the type of illicit behavior, as an example of the amount of illicit behavior by a customer.

The determination circuitry 114 determines that the amount of illicit behavior by the customer satisfies the criterion if the number of instances of illicit behavior by the customer ever detected by the illicit behavior detection circuitry 113 has reached a predetermined count, the predetermined count being greater than one. For example, the determination circuitry 114 determines that the amount of illicit behavior by the customer satisfies the criterion if the customer's illicit behavior detected by the illicit behavior detection circuitry 113 is the second or subsequent instance of such behavior by the customer. In other words, the determination circuitry 114 determines that the amount of illicit behavior by the customer satisfies the criterion if the customer has committed illicit behavior in the store S at least once in the past.

The determination circuitry 114 determines that the amount of illicit behavior by the customer does not satisfy the criterion if the number of instances of illicit behavior by the customer ever detected by the illicit behavior detection circuitry 113 has not reached the predetermined count. For example, the determination circuitry 114 determines that the amount of illicit behavior by the customer does not satisfy the criterion if the customer's illicit behavior detected by the illicit behavior detection circuitry 113 is the first instance of such behavior by the customer. In other words, the determination circuitry 114 determines that the amount of illicit behavior by the customer does not satisfy the criterion if the customer has never committed illicit behavior in the store S in the past.

We now illustrate a case where the determination circuitry 114 makes a determination based on the number of instances of illicit behavior by a customer that is counted individually for each type of illicit behavior, as an example of the amount of illicit behavior by a customer.

The determination circuitry 114 determines whether the amount of illicit behavior satisfies the criterion, for each type of illicit behavior. For the type of illicit behavior detected by the illicit behavior detection circuitry 113, the determination circuitry 114 determines whether the amount of illicit behavior satisfies the criterion by comparing the number of instances of such behavior by the customer with a predetermined reference count. For example, for the type of illicit behavior detected by the illicit behavior detection circuitry 113, the determination circuitry 114 determines that the amount of illicit behavior by the customer satisfies the criterion if the number of instances of such behavior by the customer is greater than or equal to the reference count. For the type of illicit behavior detected by the illicit behavior detection circuitry 113, the determination circuitry 114 determines that the amount of illicit behavior by the customer does not satisfy the criterion if the number of instances of such behavior by the customer is less than the reference count.

The reference count used for determination by the determination circuitry 114 may vary depending on the type of illicit behavior. For example, the determination circuitry 114 can set a lower reference count for determination of illicit behavior with a high degree of maliciousness, among the multiple types of illicit behavior, than that used for determination of illicit behavior with a low degree of maliciousness. This increases the likelihood of determining that the amount of illicit behavior by the customer satisfies the criterion if the illicit behavior has a high degree of maliciousness, compared to when the illicit behavior has a low degree of maliciousness. This, in turn, increases the likelihood of the first output circuitry 115 outputting the first alert to the in-store terminal 10 indicating the occurrence of illicit behavior, as described below.

The determination circuitry 114 may set the reference count to one for determination of a predetermined type of illicit behavior, among the multiple types of illicit behavior.

In other words, the determination circuitry 114 determines that the criterion is satisfied if the customer's illicit behavior detected by the illicit behavior detection circuitry 113 is the second or subsequent instance of such behavior by the customer; on the other hand, if the illicit behavior detected by the illicit behavior detection circuitry 113 is of a predetermined type, the determination circuitry 114 may determine that the criterion is satisfied even if the illicit behavior detected is not the second or subsequent instance of such behavior by the customer. In other words, if the illicit behavior detected by the illicit behavior detection circuitry 113 is of a predetermined type, the determination circuitry 114 may determine that the criterion is satisfied even if the illicit behavior detected is the first instance of such behavior by the customer.

For example, the determination circuitry 114 may set the reference count to one for determination of illicit behavior with a high degree of maliciousness, as the predetermined type of illicit behavior. As a result, if the illicit behavior by the customer has a high degree of maliciousness, the first output circuitry 115 outputs the first alert to the in-store terminal 10 indicating the occurrence of illicit behavior even if it is the first instance of such behavior by the customer.

We now illustrate a case where the determination circuitry 114 makes a determination based on the frequency of illicit behavior by a customer, as an example of the amount of illicit behavior by a customer.

The determination circuitry 114 determines whether the amount of illicit behavior satisfies the criterion by comparing the frequency of illicit behavior by a customer whose illicit behavior has been detected by the illicit behavior detection circuitry 113 with a predetermined reference value. For example, if the frequency of illicit behavior by a customer whose illicit behavior has been detected by the illicit behavior detection circuitry 113 is greater than or equal to the reference value, the determination circuitry 114 determines that the amount of illicit behavior by the customer satisfies the criterion. If the frequency of illicit behavior by a customer whose illicit behavior has been detected by the illicit behavior detection circuitry 113 is less than the reference value, the determination circuitry 114 determines that the amount of illicit behavior by the customer does not satisfy the criterion.

The determination circuitry 114 may compare the frequency of illicit behavior with the reference value collectively for all behavior types, regardless of the type of illicit behavior, or for each type of illicit behavior. In cases where the determination circuitry 114 compares the frequency of illicit behavior with the reference value for each type of illicit behavior, the reference value may vary depending on the type of illicit behavior.

We now illustrate a case where the determination circuitry 114 makes a determination based on points converted from the number of instances of illicit behavior by a customer, as an example of the amount of illicit behavior by a customer.

For a customer whose illicit behavior has been detected by the illicit behavior detection circuitry 113, the determination circuitry 114 determines whether the amount of illicit behavior satisfies the criterion by comparing the points converted from the number of instances of illicit behavior by the customer with a predetermined reference value. For example, the determination circuitry 114 determines that the amount of illicit behavior by the customer satisfies the criterion if the points converted from the number of instances of illicit behavior by the customer are greater than or equal to the reference value. The determination circuitry 114 determines that the amount of illicit behavior by the customer does not satisfy the criterion if the points converted from the number of instances of illicit behavior by the customer are less than the reference value.

In response to the determination circuitry 114 determining that the amount of illicit behavior by the customer satisfies the criterion, the first output circuitry 115 outputs the first alert to the in-store terminal 10. The first alert is an alert indicating the occurrence of illicit behavior. This allows a clerk using the in-store terminal 10 to recognize that a customer has committed illicit behavior in the store S. The clerk can then take action against the illicit behavior, such as approaching the customer who has committed the illicit behavior and reporting it to a security company, the police, etc.

On the other hand, if the determination circuitry 114 determines that the amount of illicit behavior by the customer does not satisfy the criterion, the first output circuitry 115 does not output the first alert to the in-store terminal 10. Here, if the amount of illicit behavior by the customer does not satisfy the criterion, it is highly likely that the customer's illicit behavior detected by the illicit behavior detection circuitry 113 has been committed by mistake without malicious intent. In this case, the first output circuitry 115 does not output the first alert, and this prevents a decrease in work efficiency of the clerks at the store S.

As described above, the determination circuitry 114 may determine whether the amount of illicit behavior satisfies the criteria for each type of illicit behavior detected by the illicit behavior detection circuitry 113. In this case, whether or not the first output circuitry 115 outputs the first alert depends on the amount and type of illicit behavior.

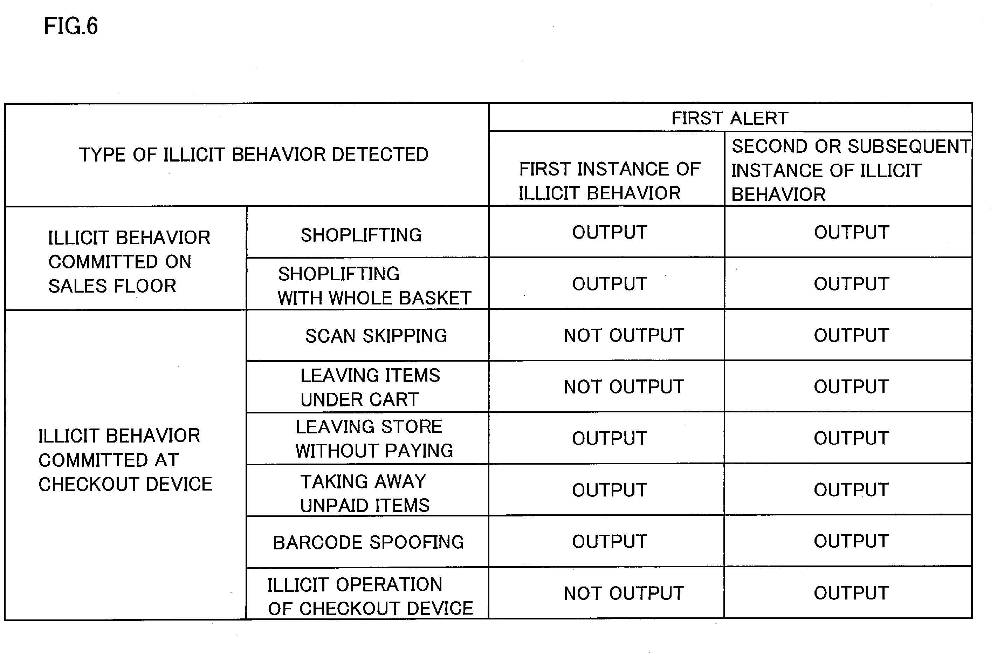

FIG. 6 illustrates an example relationship between whether or not the first output circuitry 115 outputs the first alert and the type and amount of illicit behavior detected by the illicit behavior detection circuitry 113. The figure illustrates a scenario where the determination circuitry 114 determines whether the amount of illicit behavior satisfies the criterion for each type of illicit behavior based on the number of instances of illicit behavior by a customer. More specifically, the figure illustrates a scenario where, if a customer's illicit behavior detected by the illicit behavior detection circuitry 113 has a high degree of maliciousness, the determination circuitry 114 determines that the amount of illicit behavior satisfies the criterion even if it is the first instance of such behavior by the customer.

In the example shown in FIG. 6, if illicit behavior with a high degree of maliciousness, i.e., any of shoplifting, shoplifting with the whole basket, leaving the store without paying, taking away unpaid items, and barcode spoofing, is detected by the illicit behavior detection circuitry 113, the first output circuitry 115 outputs the first alert even if it is the first instance of such behavior by the customer.

On the other hand, if illicit behavior with a low degree of maliciousness, i.e., any of leaving items under the cart, scan skipping, and illicit operation of the checkout device 30, is detected by the illicit behavior detection circuitry 113, the first output circuitry 115 does not output the first alert if it is the first instance of such behavior by the customer. In this case, the first output circuitry 115 outputs the first alert only if it is the second or subsequent instance of such behavior by the customer.

By way of example, the first alert may be in the form of predetermined text information presented on the display 12 of the in-store terminal 10 indicating that a customer has committed illicit behavior. To further illustrate, in response to the determination circuitry 114 determining that the amount of illicit behavior by a customer satisfies the criterion, the first output circuitry 115 issues a command to the in-store terminal 10 to cause the display 12 to present predetermined text information.

The first alert may include additional information, in addition to the predetermined text information indicating the occurrence of illicit behavior by the customer. Examples of the additional information include information identifying the customer who has committed illicit behavior, information indicating the type of illicit behavior, and information indicating the degree of maliciousness of the illicit behavior. Other examples of the additional information include information indicating the location in the store S where the customer has committed illicit behavior and information indicating the number of instances and dates of illicit behavior that the customer has committed in the past.

As described above, the degree of maliciousness of illicit behavior depends on the type of illicit behavior. The first output circuitry 115 can output information indicating the degree of maliciousness of illicit behavior to the in-store terminal 10 according to the type of illicit behavior detected by the illicit behavior detection circuitry 113.

In general, customers engaging in illicit behavior with malicious intent do not use credit cards, membership cards, etc., because they won't disclose information that identify themselves. In other words, if a customer uses a credit card, membership card, etc. at the checkout device 30, it is highly likely that the customer may have committed illicit behavior by mistake without malicious intent. Thus, if the first output circuitry 115 obtains information from the checkout device 30 indicating that the customer is using a credit card, membership card, etc., the first output circuitry 115 can output information indicating that the illicit behavior in question has a low degree of maliciousness, as the information indicating the degree of maliciousness of illicit behavior.

The first output circuitry 115 may output the first alert to the relevant checkout device 30 in addition to the in-store terminal 10. The checkout device 30 is an example of the customer terminal used by customers.

By way of example, the first alert output to the checkout device 30 may be in the form of predetermined text information presented on the operational display 41 of the POS register 40 indicating that a customer has committed illicit behavior.

This allows the customer him/herself to recognize that he/she has committed illicit behavior, through the first alert presented on the checkout device 30. For example, this facilitates the customer to resolve the illicit behavior by letting him/her recognize that he/she has committed illicit behavior by mistake without malicious intent.

In response to the entry detection circuitry 112 detecting the entry of a customer with a history of illicit behavior, the second output circuitry 116 outputs a second alert to the in-store terminal 10. The second alert is an alert indicating that a customer with a history of illicit behavior has entered the store S.

In general, customers who have a history of illicit behavior, i.e., customers who have committed illicit behavior in the store S in the past, are more likely to commit illicit behavior again in the store S than those who do not have a history of illicit behavior. In the present embodiment, in response to detecting the entry of a customer with a history of illicit behavior, the second alert is output to the in-store terminal 10, which facilitates the clerk using the in-store terminal 10 to take action, such as monitoring the customer's behavior. This reduces the possibility of the customer committing illicit behavior again in the store S.

By way of example, the second alert may be in the form of predetermined text information presented on the display 12 of the in-store terminal 10 indicating that a customer with a history of illicit behavior has entered the store S. To further illustrate, in response to the entry detection circuitry 112 detecting the entry of a customer with a history of illicit behavior, the second output circuitry 116 issues a command to the in-store terminal 10 to cause the display 12 to present predetermined text information.

The second output circuitry 116 may output the second alert to the in-store terminal 10 only in response to the entry detection circuitry 112 detecting the entry of a customer with a history of illicit behavior of a predetermined type, among multiple types of illicit behavior. For example, the second output circuitry 116 may output the second alert to the in-store terminal 10 only in response to the entry detection circuitry 112 detecting the entry of a customer with a history of illicit behavior that indicates that the customer has ever committed illicit behavior with a high degree of maliciousness, among multiple types of illicit behavior. This reduces the frequency with which the second alert is output to the in-store terminal 10, compared to when the second alert is output regardless of the type of illicit behavior. This in turn prevents a decrease in work efficiency of the clerks at the store S.

As described above, the entry detection circuitry 112 can detect a customer's entry at the doorway 5 of the store S. In this case, the second output circuitry 116 can output the second alert to the in-store terminal 10 at the time when the customer's entry is detected at the doorway 5 of the store S.

In response to detecting the entry of a customer who has ever committed shoplifting or shoplifting with the whole basket among multiple types of illicit behavior, the second output circuitry 116 preferably outputs the second alert to the in-store terminal 10 at the time when the customer's entry is detected at the doorway 5 of the store S. Shoplifting and shoplifting with the whole basket are types of illicit behavior that is mainly committed on the sales floor of the store S and in which customers do not use any checkout device 30. Thus, the second alert is output at the time when the entry of a customer who has ever committed shoplifting or shoplifting with the whole basket is detected at the doorway 5. This allows the clerks to recognize the customer's entry prior to the customer committing shoplifting or shoplifting with the whole basket again.

As described above, the entry detection circuitry 112 can also detect a customer's entry near any checkout device 30. In this case, the second output circuitry 116 can output the second alert to the in-store terminal 10 at the time when a customer's entry is detected near any checkout device 30.

In response to detecting the entry of a customer who has ever committed any type of illicit behavior that is committed near the checkout device 30 among multiple types of illicit behavior, the second output circuitry 116 preferably outputs the second alert to the in-store terminal 10 at the time when the customer's entry is detected near the checkout device 30. The types of illicit behavior that is committed near the checkout device 30 include scan skipping, leaving items under the cart, leaving the store without paying, taking away unpaid items, barcode spoofing, and illicit operation of the checkout device 30.

### <Monitoring Process>

A monitoring process in which the control circuitry 110 of the control device 100 monitors customers in the store S for illicit behavior and outputs an alert is described below with reference to a flowchart.

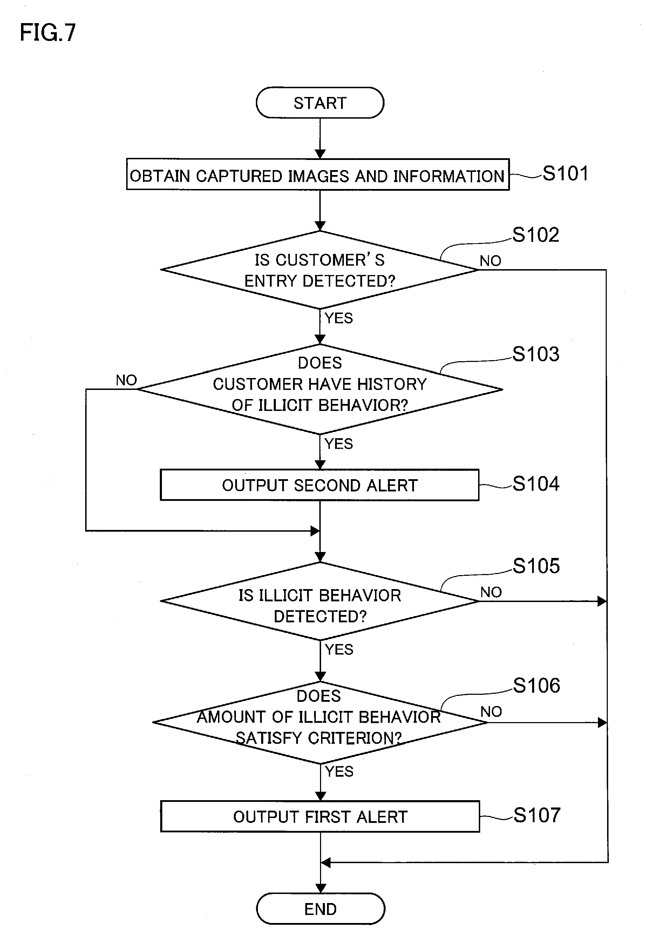

FIG. 7 is a flowchart illustrating an example monitoring process by the control circuitry 110. The control circuitry 110 repeats the monitoring process at predetermined time intervals (e.g., 1 mm second).

The acquisition circuitry 111 of the control circuitry 110 obtains images captured by the image capture devices 20 and information output from the checkout devices 30 (step 101).

To further illustrate, the acquisition circuitry 111 obtains images captured by the entrance camera 20a, the exit camera 20b, the in-store cameras 20c, and the checkout cameras 20d that constitute the image capture devices 20.

The acquisition circuitry 111 obtains information about registered items, information that is obtained by reading credit cards and can identify customers, incomplete payment notifications, etc., as the information output from the checkout devices 30.

Then, the entry detection circuitry 112 of the control circuitry 110 detects a customer's entry to the store S based on the captured images and information obtained in step 101 (step 102). In other words, in step 102, the entry detection circuitry 112 determines whether a customer has entered the store S, based on the captured images and information obtained in step 101.

If no customer is detected entering the store S (No in step 102), the control circuitry 110 terminates the monitoring process.

On the other hand, if a customer is detected entering the store S (YES in step 102), the entry detection circuitry 112 of the control circuitry 110 determines whether the customer detected entering the store S is a customer with a history of illicit behavior (step 103). To further illustrate, the entry detection circuitry 112 determines whether the customer detected entering the store S is a customer with a history of illicit behavior, based on the captured images and information used for detecting the customer's entry in step 102 and the customer identification information stored in the memory 120.

If the customer detected entering the store S is not a customer with a history of illicit behavior (NO in step 103), the control circuitry 110 goes to step 105 (described below) and continues the monitoring process.

If the customer detected entering the store S is a customer with a history of illicit behavior (YES in step 103), the second output circuitry 116 of the control circuitry 110 outputs the second alert to the in-store terminal 10 (step 104). As described above, the second alert is an alert indicating that a customer with a history of illicit behavior has entered the store S.

The in-store terminal 10 presents, on the display 12, information indicating that the customer with a history of illicit behavior has entered the store S. This allows a clerk using the in-store terminal 10 to recognize that the customer with a history of illicit behavior has entered the store S.

Then, the illicit behavior detection circuitry 113 of the control circuitry 110 detects any illicit behavior by the customer in the store S based on the captured images and information obtained in step 101 (step 105). In other words, in step 105, the illicit behavior detection circuitry 113 determines whether the customer has committed illicit behavior in the store S, based on the captured images and information acquired in step 101.

If no illicit behavior by the customer is detected in the store S (NO in step 105), the control circuitry 110 terminates the monitoring process.

On the other hand, if any illicit behavior by the customer is detected in the store S (YES in step 105), the determination circuitry 114 of the control circuitry 110 determines whether the amount of illicit behavior by the customer satisfies the predetermined criterion (step 106). To further illustrate, the determination circuitry 114 determines whether the amount of illicit behavior by the customer satisfies the criterion based on the history of the customer's illicit behavior stored in the memory 120.

If the amount of illicit behavior by the customer does not satisfy the criterion (NO in step 106), the control circuitry 110 terminates the monitoring process.

On the other hand, if the amount of illicit behavior by the customer satisfies the criterion (YES in step 106), the first output circuitry 115 of the control circuitry 110 outputs the first alert to the in-store terminal 10 (step 107). As described above, the first alert is an alert indicating the occurrence of illicit behavior.

The in-store terminal 10 presents, on the display 12, information indicating the occurrence of illicit behavior. This allows a clerk using the in-store terminal 10 to recognize that the customer has committed illicit behavior in the store S.

The control circuitry 110 thus completes the monitoring process sequence.

As described above, the monitoring system 1 of the present embodiment includes the illicit behavior detection circuitry 113 configured to detect illicit behavior by a customer regarding the purchase of items at the store S. The monitoring system 1 further includes the first output circuitry 115 configured to, in response to the amount of illicit behavior by the customer detected by the illicit behavior detection circuitry 113 satisfying a predetermined criterion, output the first alert to the in-store terminal 10 indicating the occurrence of illicit behavior.

The first alert output to the in-store terminal 10 allows a clerk using the in-store terminal 10 to recognize that illicit behavior has taken place at the store S. The clerk can then take action against the illicit behavior, such as approaching the customer who has committed the illicit behavior and reporting it to a security company, the police, etc.

Here, if the customer has mistakenly committed the illicit behavior without malicious intent, it is preferable not to take action against the illicit behavior, such as approaching the customer who has committed the illicit behavior and reporting it to a security company, the police, etc. from the viewpoint of, among others, preventing a decrease in work efficiency of the clerks at the store S.

For example, consider a case where the first output circuitry 115 outputs the first alert to the in-store terminal 10 with no exception, regardless of whether the amount of illicit behavior satisfies the criterion. **In** this case, the first alert is output to the in-store terminal 10 even if the amount of illicit behavior by the customer is small and it is highly likely that the customer has mistakenly committed illicit behavior without malicious intent. This increases the number of times the clerks have to deal with illicit behavior at the store S, which may reduce the work efficiency of the clerks at the store S.

**In** contrast, in the present embodiment, the first alert is output to the in-store terminal 10 if the amount of illicit behavior by the customer detected by the illicit behavior detection circuitry 113 satisfies the predetermined criterion. This prevents a decrease in work efficiency of the clerks at the store S.

Thus, the present embodiment provides the monitoring system 1 that can flexibly accommodate the need to be able to take action in light of factors such as the scale of damage caused by illicit behavior and the degree of the maliciousness of illicit behavior.

Also, for example, consider a case where illicit behavior of a customer is detected by counting the number of times the customer has picked up items and the number of times the customer has registered items to be purchased at the store S, and the first alert is output based on this detection result. In this case, devices to count these numbers and other equipment are required, which is likely to complicate the configuration of the monitoring system 1 and management device 100.

In contrast, in the present embodiment, the first alert is output if the amount of illicit behavior by a customer satisfies the predetermined criteria based on information such as the history of illicit behavior stored in the memory 120. This makes it possible to output the first alert using a simpler configuration than when illicit behavior is detected by counting the number of times a customer has picked up items and the number of times the customer has registered items to be purchased at the store S.

In the monitoring system 1, the first output circuitry 115 outputs the first alert if the illicit behavior of a customer detected by the illicit behavior detection circuitry 113 is the second or subsequent instance of such behavior by the customer. On the other hand, the first output circuitry 115 does not output the first alert if the illicit behavior of a customer detected by the illicit behavior detection circuitry 113 is the first instance of such behavior by the customer.

This prevents a decrease in work efficiency of the clerks at the store S, compared to when the first output circuitry 115 outputs the first alert regardless of whether the illicit behavior of a customer detected by the illicit behavior detection circuitry 113 is the first instance or the second or subsequent instance of such behavior by the customer.

In the monitoring system 1, the first output circuitry 115 outputs the first alert if the customer whose illicit behavior has been detected by the illicit behavior detection circuitry 113 has a history of illicit behavior previously committed during checkout processes in the store S. On the other hand, the first output circuitry 115 does not output the first alert if the customer whose illicit behavior has been detected by the illicit behavior detection circuitry 113 does not have a history of illicit behavior previously committed during checkout processes in the store S.

This reduces the frequency with which the first alert is output, compared to when the first output circuitry 115 outputs the first alert regardless of whether or not the customer whose illicit behavior has been detected by the illicit behavior detection circuitry 113 has a history of previous illicit behavior. This in turn prevents a decrease in work efficiency of the clerks at the store S.

The monitoring system 1 further includes the determination circuitry 114 configured to determine whether the amount of illicit behavior detected by the illicit behavior detection circuitry 113 satisfies a criterion. Upon detecting a customer's illicit behavior, the illicit behavior detection circuitry 113 obtains information about the type of the illicit behavior. The determination circuitry 114 determines whether the amount of illicit behavior satisfies the criterion for each type of illicit behavior. In response to the determination circuitry 114 determining that the criterion is satisfied, the first output circuitry 115 outputs the first alert.

The illicit behavior includes the following two types: illicit behavior that is likely to be committed by customers with malicious intent; and illicit behavior that is likely to be committed by customers by mistake, without malicious intent. In the present embodiment, the determination circuitry 114 makes a determination for each type of illicit behavior, which increases the possibility of the first alert being output in response to the occurrence of illicit behavior with a high degree of maliciousness, compared to when a determination is made regardless of the type of illicit behavior.

In monitoring system 1, the determination circuitry 114 determines that the criterion is satisfied if a customer's illicit behavior detected by the illicit behavior detection circuitry 113 is the second or subsequent instance of such behavior by the customer. On the other hand, if a customer's illicit behavior detected by the illicit behavior detection circuitry 113 is of a predetermined type, the determination circuitry 114 determines that the criterion is satisfied even if it is not the second or subsequent instance of such behavior by the customer.

Thus, if a customer's illicit behavior detected by the illicit behavior detection circuitry 113 is of a predetermined type, the first alert will be output even if it is the first instance of such behavior by the customer. For example, using this implementation for illicit behavior with a high degree of maliciousness, such as shoplifting with the whole basket and shoplifting, as the predetermined type of illicit behavior facilitates actions against such behavior, such as approaching the customer who has committed the illicit behavior with a high degree of maliciousness and reporting it to a security company, the police, etc.

The monitoring system 1 further includes the entry detection circuitry 112 configured to detect a customer's entry to the store S. The monitoring system 1 further includes the second output circuitry 116 configured to, in response to the entry detection circuitry 112 detecting the entry of a customer with a history of illicit behavior, output the second alert to the in-store terminal 10 indicating that the customer with a history of illicit behavior has entered the store S.

This facilitates a clerk using the in-store terminal 10 to recognize the entry of the customer with a history of illicit behavior, prior to the customer committing illicit behavior again. This more reliably prevents the customer's illicit behavior at the store S.

In the monitoring system 1, the entry detection circuitry 112 detects a customer with a history of illicit behavior near any checkout device 30.

In this case, the second alert is output to the in-store terminal 10 at the time when the customer is near the checkout device 30. This facilitates a clerk using the in-store terminal 10 to monitor the customer operating the checkout device 30, which more reliably prevents the customer's illicit behavior that may be committed near the checkout device 30.

In the monitoring system 1, the entry detection circuitry 112 also detects a customer with a history of illicit behavior at the doorway 5 of the store S.

The second output circuitry 116 outputs the second alert at the time when the entry of a customer is detected by the entry detection circuitry 112. More preferably, the second output circuitry 116 outputs the second alert at the time when the entry of a customer with a history of illicit behavior of a predetermined type is detected.

This facilitates a clerk using the in-store terminal 10 to monitor the customer entering the store S, prior to the customer committing illicit behavior at the store S, which more reliably prevents the customer's illicit behavior. In particular, by outputting the second alert at the time of detecting the entry of a customer with a history of illicit behavior with a high degree of maliciousness as the predetermined type of illicit behavior, it is possible to more reliably prevent the customer from committing illicit behavior with a high degree of maliciousness again.

The monitoring system 1 further includes the memory 120 configured to store count information for each customer and for each type of illicit behavior. The count information is information about the number of instances of illicit behavior by each customer. The monitoring system 1 further includes the determination circuitry 114 configured to determine whether the amount of illicit behavior by a customer detected by the illicit behavior detection circuitry 113 satisfies the criterion, based on the count information. In response to the determination circuitry 114 determining that the criterion is satisfied, the first output circuitry 115 outputs the first alert. In response to the behavior of a customer at the store S satisfying a predetermined condition, the memory 120 initializes the count information relating to the customer.

This prevents the occurrence of situations where the first alert is output despite the low possibility of illicit behavior being committed by the customer, compared to when, for example, the memory 120 does not initialize the count information relating to the customer. This in turn prevents a decrease in work efficiency of the clerks at the store S associated with frequent output of the first alert.

In the monitoring system 1, the first output circuitry 115 outputs the first alert to the relevant checkout device 30 in addition to the in-store terminal 10.

This allows the customer him/herself to recognize that he/she has committed illicit behavior, through the first alert presented on the checkout device 30.

In monitoring system 1, the first output circuitry 115 outputs, in addition to the first alert, information indicating the degree of maliciousness of the customer's illicit behavior to the in-store terminal 10.

This facilitates a clerk using the in-store terminal 10 to take action, such as approaching the customer who has committed the illicit behavior and reporting it to a security company, the police, etc., based on the information output with the first alert indicating the degree of maliciousness of the customer's illicit behavior,

Incidentally, the accuracy with which the illicit behavior detection circuitry 113 detects a customer's illicit behavior may depend on the images captured by the image capture devices 20. To further illustrate, the greater the number of images captured by the multiple in-store cameras 20c that show the occurrence of illicit behavior by a customer, the more likely it is that the customer has actually committed such behavior. On the other hand, if images captured by one of the in-store cameras 20c show the occurrence of illicit behavior by a customer while images captured by other in-store cameras 20c do not, it is possible that the customer has not actually committed such behavior.

In the present embodiment, the illicit behavior detection circuitry 113 may detect a customer's illicit behavior at the store S only when more than a predetermined number of image capture devices 20 capture images that show the occurrence of illicit behavior by the customer. In this case, the first output circuitry 115 outputs the first alert only when illicit behavior by the customer can be detected. This prevents the occurrence of situations where the first alert is erroneously output despite the customer not committing illicit behavior.

In the monitoring system 1 of the present embodiment, the illicit behavior detection circuitry 113 in the control circuitry 110 of the management device 100 detects illicit behavior by customers based on images captured by the image capture devices 20 and information from the checkout devices 30. However, this implementation is not limiting. For example, the image capture devices 20 may detect illicit behavior by customers based on captured images, and the checkout devices 30 may detect illicit behavior by customers based on, e.g., their operation of the checkout devices 30. In this case, the image capture devices 20 and the checkout devices 30 are examples of the detection circuitry.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art without departing from the scope and spirit of the present disclosure. The exemplary embodiment was chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing system comprising:
detection circuitry configured to detect illicit behavior by a customer regarding purchase of items at a store;
determination circuitry configured to determine whether an amount of illicit behavior by the customer detected by the detection circuitry satisfies a predetermined criterion; and
output circuitry configured to, in response to the determination circuitry determining that the amount of illicit behavior by the customer satisfies the criterion, output a first alert to an in-store terminal, the first alert indicating occurrence of the illicit behavior.

2. The information processing system according to claim 1, wherein the determination circuitry is configured to:
determine that the criterion is satisfied if a number of instances of illicit behavior by the customer has reached a predetermined count, the predetermined count being greater than one; and
determine that the criterion is not satisfied if the number of instances has not reached the predetermined count.

3. The information processing system according to claim 1, wherein the determination circuitry is configured to determine whether the amount of illicit behavior satisfies the criterion for the customer whose illicit behavior has been detected by the detection circuitry, the amount of illicit behavior including illicit behavior that the customer previously committed during checkout processes.

4. The information processing system according to claim 1, wherein the detecting circuitry is configured to, in response to detecting illicit behavior by the customer, obtain information about a type of the illicit behavior, and
the determination circuitry is configured to determine whether the amount of illicit behavior by the customer satisfies the criterion for each type of illicit behavior.

5. The information processing system according to claim 4, wherein the determination circuitry is configured to:
determine that the criterion is satisfied if the illicit behavior by the customer detected by the detection circuitry is the second or subsequent instance of illicit behavior by the customer; and
if the illicit behavior by the customer detected by the detection circuitry is of a predetermined type, determine that the criterion is satisfied even if the illicit behavior is not the second or subsequent instance of illicit behavior by the customer.

6. The information processing system according to claim 1, further comprising:
second detection circuitry configured to detect a customer entering the store; and
second output circuitry configured to, in response to the second detection circuitry detecting a customer with a history of illicit behavior of a predetermined type, output a second alert to the in-store terminal at a time when the customer is detected, the second alert indicating the detection of the customer with the history.

7. The information processing system according to claim 1, further comprising a memory configured to store count information for each customer and for each type of illicit behavior, the count information being information about a number of instances of illicit behavior by each customer, wherein
the determination circuitry is configured to determine whether the amount of illicit behavior by the customer detected by the detection circuitry satisfies the criterion for each type of illicit behavior, based on the count information.

8. The information processing system according to claim 1, further comprising a memory configured to store count information for each customer, the count information being information about a number of instances of illicit behavior by each customer, wherein
the determination circuitry is configured to determine whether the amount of illicit behavior by the customer detected by the detection circuitry satisfies the criterion, based on the count information, and
the memory is configured to, in response to behavior of the customer at the store satisfying a predetermined condition, initialize the count information relating to the customer.

9. The information processing system according to claim 1, wherein the output circuitry is configured to output the first alert to a customer terminal used by the customer, in addition to the in-store terminal.

10. The information processing system according to claim 1, wherein the output circuitry is configured to output, in addition to the first alert, information representing a degree of maliciousness of the illicit behavior by the customer to the in-store terminal.

11. A program for causing a computer to implement functions of:
detecting illicit behavior by a customer regarding purchase of items at a store;
determining whether an amount of illicit behavior by the customer detected satisfies a predetermined criterion; and
in response to the amount of illicit behavior satisfying the criterion, outputting a first alert to an in-store terminal, the first alert indicating occurrence of the illicit behavior.

12. A monitoring method in a monitoring system, the method comprising:
detecting illicit behavior by a customer regarding purchase of items at a store;
determining whether an amount of illicit behavior by the customer detected satisfies a predetermined criterion; and
in response to the amount of illicit behavior satisfying the criterion, outputting a first alert to an in-store terminal, the first alert indicating occurrence of the illicit behavior.
